# EUROPEAN PATENT SPECIFICATION

(11) **EP 2 719 156 B1**
(45) Date of publication and mention of the grant of the patent: **23.01.2019**
(21) Application number: 12726305.1
(22) Date of filing: 30.05.2012
(51) Int. Cl.: H04W 76/14, H04M 1/725, H04W 84/18, H04W 92/18

(54) **TECHNIQUES FOR FACILITATING INTEROPERATION BETWEEN AN ACCESSORY AND MULTIPLE DEVICES**
TECHNIK ZUM VEREINFACHEN DER INTEROPERABILITÄT ZWISCHEN ZUBEHÖR UND MEHREREN GERÄTEN
TECHNIQUE POUR FACILITER DE INTER-OPÉRATION ENTRE LACCESSOIRE ET PLUSIEURS DISPOSITIFS

(30) Priority: 06.06.2011 US 201113154122
(43) Date of publication of application: 16.04.2014
(73) Proprietor: Apple Inc., Cupertino CA 95014 (US)
(72) Inventor: WALSH, Robert J., Cupertino, California 95014 (US); RATHI, Shailesh, Cupertino, California 95014 (US)
(74) Representative: Barnfather, Karl Jon
(86) International application number: PCT/US2012/040014
(87) International publication number: WO 2012/170254

(56) References cited:
- EP-A1- 1 530 340
- WO-A1-01/76184
- WO-A1-2012/030561
- US-A1- 2010 159 948

## Description

### BACKGROUND

The present disclosure relates in general to electronic devices that can interoperate with accessories, and in particular to techniques for resolving issues that may arise when multiple devices interact with one accessory.

A portable media device generally refers to a handheld device that is capable of managing and/or playing back media assets such as audio, video, and still image files. Some portable media devices, such as the iPod®, iPhone™, and iPad™ available from Apple Inc. of Cupertino, CA, can provide users a variety of services in addition to media management and playback. Examples of such services include the storage of personal data such as calendar, contacts, and notes; Internet access; mobile telephony and videoconferencing; and the ability to selectively download and run various application programs.

A portable media device typically includes a number of connectors or ports that can be used to interface with other devices. For instance, one connector or port can be used to establish a connection between the portable media device and a host computer for transferring data to/from the host computer. Another (or the same) connector or port can be used to establish a connection between the portable media device and an accessory device (referred to herein as an accessory) for, e.g., playing back or presenting media assets stored on the portable media device.

Certain types of accessories are capable of (1) interfacing with a single portable media device via multiple communication channels and (2) interfacing with multiple portable media devices simultaneously, each via a separate communication channel. For example, one type of conventional car head unit includes a physical connector for connecting with a portable media device over a wired communication channel (e.g., 30 pin serial, USB, etc.), as well as a wireless port for connecting with the same, or a different, portable media device over a wireless communication channel (e.g., Bluetooth).

In situations where an accessory can potentially interface with one or several portable media devices simultaneously, the accessory may be unable to distinguish between scenarios (1) and (2) described above. For instance, in the car head unit example, when the car head unit detects connections on both the wired and wireless communication channels, the car head unit may be unable to determine whether the connections lead to the same device or to different devices. This, in turn, may cause the accessory to operate in an unexpected or erroneous manner.

Further background information can be found in the following documents:
EP1530340, which discloses a method and system for the transmission of data between a client and a server over at least two physical links
US2010/159948, which discloses an adaptive networking system for power savings.
WO2012/030561, which discloses techniques for facilitating communication between a portable media device and an accessory via multiple communication paths.

### BRIEF SUMMARY

Embodiments of the present invention provide techniques that facilitate interoperation between an accessory and multiple devices. In one set of embodiments, a device can receive, over a first communication channel of a first type, information from an
accessory identifying communication channels of a second type supported by the accessory. The device can further establish a connection with the accessory on a second communication channel of the second type. Upon establishment of the connection, the device can transmit over the first communication channel a notification identifying the connection on the second communication channel. Based on the notification, the accessory can determine that it is
connected to the same device on the first and second communication channels and can operate accordingly.

In a further set of embodiments, upon closure of the connection on the second communication channel, the device can transmit over the first communication channel a second notification to the accessory. Based on the second notification, the accessory can determine that the device is no longer connected via the second communication channel.

In certain embodiments, the accessory can detect a connection on a second communication channel of the second type without having received any notifications from the device connected via the first communication channel. In these embodiments, the accessory can determine that it is connected to two different devices on the first and second
communication channels respectively.

A further understanding of the nature and advantages of the embodiments disclosed herein can be realized by reference to the remaining portions of the specification and the attached drawings.

### BRIEF DESCRIPTION OF THE DRAWINGS

FIG. 1 is a simplified illustration of a system according to an embodiment of the present invention.
FIG. 2 is a simplified block diagram of a system according to an embodiment of the present invention.
FIGS. 3 and 4 are flow diagrams of processes performed by a device configured to interoperate with an accessory according to an embodiment of the present invention.
FIGS. 5-7 are flow diagrams of processes performed by an accessory configured to interoperate with a device according to an example.

### DETAILED DESCRIPTION

There is provided a method and apparatus as defined by the appended claims.

In the following description, for the purposes of explanation, numerous details are set forth in order to provide an understanding of various embodiments of the present invention. It will be apparent, however, to one skilled in the art that certain embodiments can be practiced without some of these details.

Embodiments of the present invention provide techniques that facilitate
interoperation between an accessory and multiple devices. In one set of embodiments, a device can receive, over a first communication channel of a first type, information from an accessory identifying communication channels of a second type supported by the accessory. The device can further establish a connection with the accessory on a second communication channel of the second type. Upon establishment of the connection, the device can transmit over the first communication channel a notification identifying the connection on the second communication channel. Based on the notification, the accessory can determine that it is connected to the same device on the first and second communication channels and can operate accordingly.

In a further set of embodiments, upon closure of the connection on the second communication channel, the device can transmit over the first communication channel a second notification to the accessory. Based on the second notification, the accessory can determine that the device is no longer connected via the second communication channel.

In certain embodiments, the accessory can detect a connection on a second communication channel of the second type without having received any notifications from the device connected via the first communication channel. In these embodiments, the accessory can determine that it is connected to two different devices on the first and second communication channels respectively.

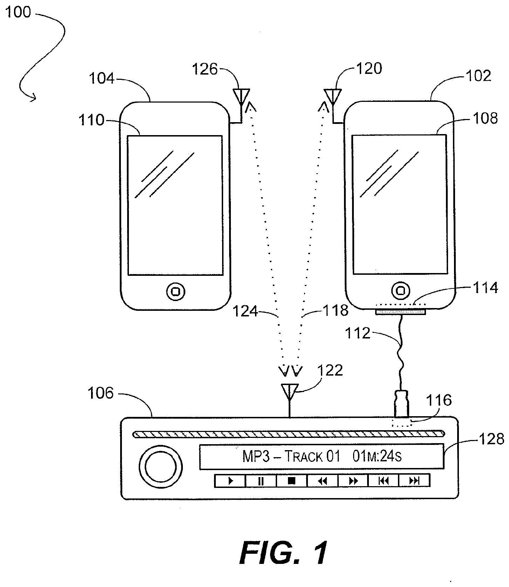

FIG. 1 is a simplified illustration of a system 100 according to an embodiment of the present invention. As shown, system 100 can include at least two portable media devices (PMDs) 102 and 104 and an accessory 106. PMDs 102 and 104 can be any type of handheld device that is capable of storing and playing back digital media assets such as audio, video, and/or still image files. In a particular embodiment, PMDs 102 and 104 can be an iPod®, iPhone™, or iPad™ (available from Apple Inc. of Cupertino, CA). PMDs 102 and 104 can include a user interface comprising user input and/or output devices such as touch-screen displays 108 and 110. PMDs 102 and 104 can also include any number of other user input and/or output devices such as scroll wheels, buttons, keyboards, trackballs, touchpads, microphones, speakers, and the like.

PMDs 102 and 104 can provide a variety of services to a user, such as the management and playback of media assets, mobile telephony and Internet access (e.g., via wireless connections such as Wi-Fi and/or wireless data networks using EDGE, 3G, or LTE technology), and execution of various application programs that can be installed on PMDs 102 and 104 by the user. In certain embodiments, PMDs 102 and 104 can provide one or more services that allow for interoperation with an accessory such as accessory 106.

Accessory 106 can be any type of electronic device that is capable of communicating with PMDs 102 and 104. In FIG. 1, accessory 106 is depicted as a car head unit. Alternatively, accessory 106 can be a speaker dock, an audio/video receiver, a computing device, and/or the like. In certain embodiments, accessory 106 can interface with a single PMD via multiple communication channels. For instance, as shown in FIG. 1, accessory 106 can interface with PMD 102 via a wired (e.g., 30 pin serial, USB, etc.) communication channel 112 between a media device connector 114 of PMD 102 and an accessory connector 116 of accessory 106, as well as via a wireless (e.g., Bluetooth) communication channel 118 between a wireless port/antenna 120 of PMD 102 and a wireless port/antenna 122 of accessory 106.

In further embodiments, accessory 106 can interface with multiple PMDs simultaneously, each via a separate communication channel. For instance, while accessory 106 and PMD 102 are connected via wired communication channel 112, accessory 106 can concurrently interface with PMD 104 via a wireless (e.g., Bluetooth) communication channel 124 between a wireless port/antenna 126 of PMD 104 and wireless port/antenna 122 of accessory 106. Although only two PMDs are depicted in FIG. 1, accessory 106 can be configured to simultaneously interface with any number of PMDs.

In the prior art, accessories such as accessory 106 are generally unable to determine whether they are connected with a single PMD via multiple communication channels (e.g., PMD 102) or with multiple PMDs simultaneously (e.g., PMDs 102 and 104). This can, in certain circumstances, compromise the functionality of the accessory. For example, assume that accessory 106 has initially established a connection with PMD 102 on wired communication channel 112. This connection can include a control path (e.g., an iPod Accessory Protocol (iAP) path) that allows PMD 102 to transmit a user interface to accessory 106 for display on an output device (e.g., output device 128), as well as receive control signals (e.g. call answer, play, pause, fast forward, etc.) from accessory 106.

Further, assume that accessory 106 is capable of establishing (concurrently with the connection over wired communication channel 112) a Bluetooth Hands-Free Profile (HFP) connection with either PMD 102 or 104 on wireless communication channels 118 or 124 respectively. Such connections may be made to handle incoming phone calls from PMDs 102 or 104. If a Bluetooth connection is established with PMD 102 on wireless communication channel 118, it may be desirable for accessory 106 to request/receive a "call answer" user interface from PMD 102 over wired communication channel 112 when an incoming call is detected on channel 118. This would allow an end-user of accessory 106 to answer (or reject) the call using a customized UI provided by PMD 102. If a Bluetooth connection is established with PMD 104 on wireless communication channel 124, it may be desirable for accessory 106 to render its own "call answer" user interface when an incoming call is detected on channel 124, since any user interface received over wired communication channel 112 would apply solely to PMD 102 (rather than PMD 104).

However, since accessory 106 cannot distinguish between a Bluetooth connection that is established on communication channel 118 versus a Bluetooth connection that is established on communication channel 124, accessory 106 cannot properly determine which course of action to take (and accordingly may take the wrong course of action). For instance, if a Bluetooth connection is established on wireless communication channel 124 (thereby connecting accessory 106 to PMD 104) and an incoming call is detected on the connection, the accessory may erroneously assume that the call originated from PMD 102 and request/wait for a "call answer" UI from PMD 102 over wired communication channel 112 (rather than rendering its own user interface for handling the call with respect to PMD 104).

Embodiments of the present invention address the foregoing issue (and other issues) by enabling accessory 106 and PMD 102 to exchange information over a first communication channel of a first type (e.g., wired communication channel 112) that notifies accessory 106 whenever PMD 102 connects with accessory 106 on a second communication channel of a second type (e.g., wireless communication channel 118). For instance, upon establishing a connection with PMD 102 on wired communication channel 112, accessory 106 can transmit to PMD 102 (over channel 112) information identifying Bluetooth channels supported by accessory 106. In one set of embodiments, the information can include, e.g., a list of Bluetooth MAC addresses, where at least one address in the list is associated with wireless communication channel 118. PMD 102 can then transmit a notification to accessory 106 over wired communication channel 112 whenever it establishes a Bluetooth connection with accessory 106 on wireless communication channel 118. Based on this information, accessory 106 can determine that communication channels 112 and 118 lead to the same device (PMD 102) and can make informed decisions about how to interoperate with PMD 102.

In certain embodiments, if PMD 102 subsequently closes the Bluetooth connection on wireless communication channel 118, PMD 102 can transmit a second notification to accessory 106 over wired communication channel 112 indicating that the connection has been closed. Accessory 106 can then determine that it is no longer connected to PMD 102 on wireless communication channel 118.

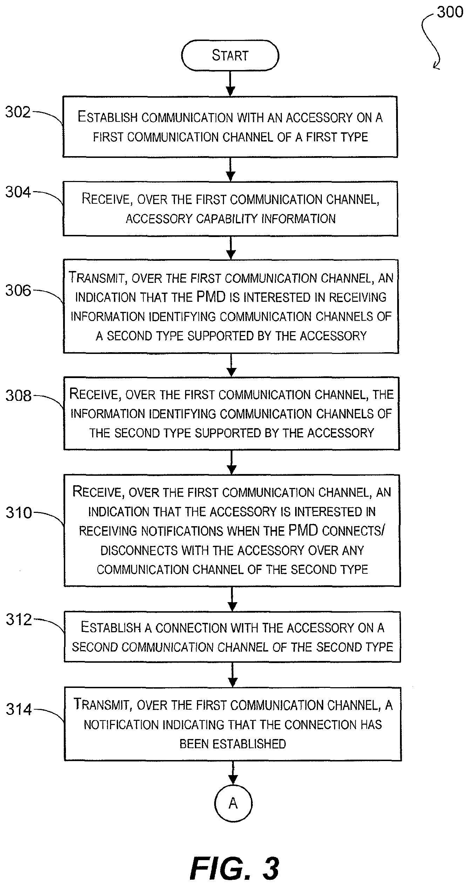

In embodiments where PMD 104 (rather than PMD 102) establishes a Bluetooth connection with accessory 106 (on, e.g., wireless communication channel 124), accessory 106 will not receive any notifications from PMD 102 over wired communication channel 112. In these situations, accessory 106 can determine, based on the absence of notifications over wired communication channel 112, that it is connected to two different devices on communication channels 112 and 124 respectively, and can interoperate with the devices accordingly. Additional details regarding the processing that can be performed by PMD 102 and/or accessory 106 to achieve the foregoing functionality is described with respect to FIGS. 3-7 below.

It should be appreciated that system 100 is illustrative and not intended to limit embodiments of the present invention. For example, although communication channels 112 and 118 are described as wired and wireless channels respectively, in various embodiments they both can be wired or wireless. Further, a variety of different types of PMDs and accessories can be used. One of ordinary skill in the art will recognize other variations, modifications, and alternatives.

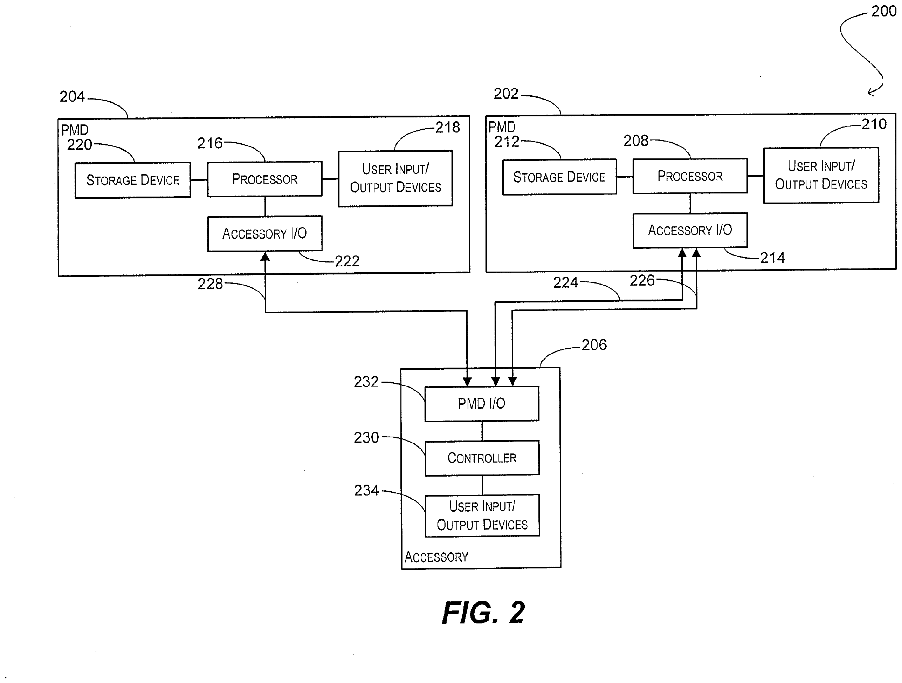

FIG. 2 is a simplified block diagram of a system 200 according to an embodiment of the present invention. As shown, system 200 can include at least two PMDs 202 and 204 and an accessory 206. In one set of embodiments, system 200 can implement system 100 of FIG. 1. For example, PMD 202 can implement PMD 102, PMD 204 can implement PMD 104, and accessory 206 can implement accessory 106.

PMDs 202 and 204 can each include a processor 208, 216, user input/output devices 210, 218, a storage device 212, 220, and an accessory I/O (input/output) interface 214, 222.

Processors 208 and 216 can be implemented as one or more integrated circuits, such as a microprocessor or microcontroller. In a particular embodiment, processors 208 and 216 can be microprocessors that use the ARM architecture (a RISC architecture designed by ARM Limited). Processors 208 and 216 can be responsible for carrying out one or more operations of PMDs 202 and 204 respectively. For example, processors 208 and 216 can select and play media assets or execute various application programs stored in storage devices 212 and 220. Processors 208 and 216 can also manage communication with accessories (e.g., accessory 206) via accessory I/O interfaces 214 and 222.

User input/output devices 210 and 218 can be any of a number of devices that allow a user to interact with PMDs 202 and 204. For example, as discussed with respect to FIG. 1, such user input/output devices can include scroll wheels, buttons, keyboards, trackballs, microphones, speakers, touch-screen displays, and so on. In various embodiments, a user can operate a particular user input device 210 or 218 to invoke the functionality of PMD 202 or 204. In addition, a user can view and/or hear output from PMD 202 or 204 via a particular user output device 210 or 218.

Storage devices 212 and 220 can be implemented, for example, using magnetic disk, flash memory, and/or any other non-volatile storage medium. In some embodiments, storage devices 212 and 220 can include non-removable storage components such as a non-removable hard disk drive or flash memory drive. In other embodiments, storage devices 212 and 220 can include removable storage media such as flash memory cards. Storage devices 212 and 220 can provide storage for any programs and/or data used by PMDs 202 and 204. For example, storage devices 212 and 220 can store media assets such as audio, video, still images, or the like, and associated metadata (e.g., asset name, artist, title, genre, playlists, etc.). Storage devices 212 and 220 can also store information other than media assets, such as information about a user's contacts (names, addresses, phone numbers, etc.); scheduled appointments and events; notes; and/or other personal information. In still other embodiments, storage devices 212 and 220 can store one or more programs to be executed by processors 208 and 216, such as video game programs, personal information management programs, programs for playing media assets and/or navigating a media asset database, and so on.

Accessory I/O interfaces 214 and 222 can include a number of signal paths configured to carry various signals between PMDs 202, 204 and accessory 206. In one set of embodiments, accessory I/O interfaces 214 and 222 can each include one or more wired interfaces such as the 30-pin serial connector used on the iPod®, iPhone™, and iPad™. Alternatively or additionally, accessory I/O interfaces 214 and 222 can each include one or more wireless interfaces (e.g., Bluetooth or the like). In certain embodiments, accessory I/O interfaces 214 and 222 can each support multiple concurrent connections between PMDs 202, 204 and accessory 206. For example, as shown in FIG. 2, PMD 202 can connect with accessory 206 via communication channels 224 and 226, and PMD 204 can connect with accessory 206 via communication channel 228. Although only three channels are depicted, any number of communication channels between PMDs 202, 204 and accessory 206 can be supported.

Accessory 206 can include a controller 230, a PMD I/O interface 232, and user input/output devices 234.

Controller 230 can be implemented as one or more integrated circuits, such as a microprocessor or microcontroller. In various embodiments, controller 230 can control the operation of accessory 206. Controller 230 can also manage communication with PMDs 202 and 204 via PMD I/O interface 232.

User input/output devices 234 can be any of a number of devices that allow a user to interact with accessory 206. Such user input/output devices can include scroll wheels, buttons, keyboards, trackballs, microphones, speakers, touch-screen displays, and so on. In various embodiments, the user can view and/or hear output from PMDs 202, 204 that is routed to accessory 206 via a particular user output device 234.

PMD I/O interface 232 can include a number of signal paths configured to carry various signals between accessory 206 and PMDs 202, 204. In one set of embodiments, PMD I/O interface 232 can include one or more wired interfaces such as the 30-pin serial connector used on the iPod®, iPhone™, and iPad™. Alternatively or additionally, PMD I/O interface 232 can include one or more wireless interfaces (e.g., Bluetooth or the like).

In various embodiments, PMD I/O interface 232 and accessory I/O interfaces 214, 222 can allow accessory 206 and PMDs 202, 204 to be in a "connected" or "disconnected" state. As used herein, accessory 206 and PMD 202/204 are connected whenever a connection between PMD I/O interface 232 and accessory I/O interface 214/222 is established (over, e.g., communication channel 224/226/228). Conversely, accessory 206 and PMD 202/204 are disconnected whenever the connection is closed. Connection can be achieved by physical attachment (e.g., between respective mating connectors of accessory 206 and PMD 202/204), by an indirect connection such as a cable, or by establishment of a wireless connection. Similarly, disconnection can be achieved by physical detachment, disconnecting a cable, powering down accessory 206 or PMD 202/204, or closing the wireless connection.

A variety of connections between PMD I/O interface 232 and accessory I/O interfaces 214 and 222 can be used, including wired connections such as 30 pin serial, USB, FireWire, or universal asynchronous receiver/transmitter ("UART"), and wireless connections such as Bluetooth, WiFi, infrared, or the like. As noted above, in certain embodiments multiple connections can be established concurrently between accessory 206 and PMDs 202 and 204 (over, e.g., communication channels 224, 226, and 228).

It should be appreciated that system 200 is illustrative and not intended to limit embodiments of the present invention. For example, PMDs 202, 204 and accessory 206 may each have other capabilities or include other components that are not specifically described. One of ordinary skill in the art will recognize other variations, modifications, and alternatives.

In one set of embodiments, PMDs 202, 204 and accessory 206 can communicate by exchanging commands and data according to a communications protocol. An example of such a protocol is the iPod® Accessory Protocol (iAP) developed by Apple Inc. According to one aspect, the protocol can define a format for messages transmitted between PMD 202/204 and accessory 206. For instance, the protocol can specify that each message is sent in a packet with a header and an optional payload. The header can provide basic information such as a start indicator, length of the packet, and a command to be processed by the recipient. The payload can provide data associated with the command. In some embodiments, the amount of associated data can be different for different commands, and some commands can provide for variable-length payloads.

According to another aspect, the protocol can define a number of "lingoes," where a "lingo" refers generally to a group of related commands. In one embodiment, a command can be uniquely identified by a first byte identifying the lingo to which the command belongs and a second byte identifying the particular command within the lingo. Other command structures may also be used. It is not required that all accessories, or all PMDs to which an accessory can be connected, support every lingo defined within the protocol or every command of a particular lingo (for instance, different devices might use different versions of a given lingo).

In one set of embodiments, the protocol can include a general lingo that enables certain core communication functions between PMD 202/204 and accessory 206. For example, the general lingo can include commands enabling PMD 202/204 and accessory 206 to identify themselves to each other and to provide information about their respective capabilities, including which (if any) other lingoes each supports and which capabilities of the other device each intends to use while connected. The general lingo can also include authentication commands that PMD 202/204 can use to verify the purported identity and capabilities of accessory 206 (or vice versa). In some cases, accessory 206 (or PMD 202/204) can be blocked from invoking certain commands or lingoes if the authentication is unsuccessful.

In further embodiments, the protocol can include one or more accessory lingoes that are used to support communication between a PMD and various different classes of accessories. Examples of such accessory lingoes include an RF tuner lingo, a remote control lingo, an extended interface lingo, and so on.

In certain embodiments, the general lingo described above can be extended to facilitate interoperation between accessory 206 and multiple PMDs (e.g., 202 and 204) according to various embodiments disclosed herein. The commands that can be part of this extension are discussed in greater detail with respect to FIGS. 3-7 below.

It should be appreciated that the protocol and associated lingoes/commands described above are illustrative and not intended to limit embodiments of the present invention. For example, some of the commands can be replaced with other commands or a combination of commands. Further, some of the lingoes and/or commands may not be supported by particular PMDs or accessories. One of ordinary skill in the art will recognize other variations, modifications, and alternatives.

Further it should be appreciated that the phrases "sending a command" and "receiving a command" can be interpreted broadly to include any exchange of commands. Thus, while the term "command" is sometimes used for a low-level atomic transaction, it can also be used to refer to high-level operations that include multiple low-level commands.

As described above, embodiments of the present invention provide techniques for facilitating interoperation between an accessory (e.g., accessory 206 of FIG. 2) and multiple PMDs (e.g., PMDs 202 and 204 of FIG. 2). In one set of embodiments, a PMD can receive, over a first communication channel of a first type, information from an accessory identifying communication channels of a second type supported by the accessory. The PMD can further establish a connection with the accessory on a second communication channel of the second type. Upon establishment of the connection, the PMD can transmit over the first communication channel a notification identifying the second communication channel. Based on the notification, the accessory can determine that it is connected to the same PMD on the first and second communication channels and can operate accordingly.

If the accessory detects a connection on a second communication channel of the second type without having received any notifications from the PMD connected via the first communication channel, the accessory can determine that it is connected to two different PMDs on the first and second communication channels respectively.

FIG. 3 is a flow diagram of a process 300 that can be performed by PMD 202 upon connecting with accessory 206 via a first communication channel of a first type according to an embodiment of the present invention. In a particular embodiment, portions of process 300 can be performed by PMD 202 as part of an initialization sequence prior to engaging in normal operation with accessory 206. Process 300 can be implemented by PMD 202 in hardware, software, or a combination thereof. As software, process 300 can be encoded as program code stored on a machine-readable storage medium.

At block 302, PMD 202 can establish communication with accessory 206 on a first communication channel of a first type. In various embodiments, the first channel type can be a wired channel type (e.g., 30 pin serial, USB, etc.) or a wireless (e.g., WiFi, infrared, radio frequency, etc.) channel type. In a particular embodiment, the first channel type can be configured to pass control signals between PMD 202 and accessory 206 according to an accessory control protocol, such as iAP.

At block 304, PMD 202 can receive, over the first communication channel, accessory capability information from accessory 206. For example, PMD 202 can receive information indicating whether accessory 206 is capable of providing status information identifying communication channels of a second type supported by the accessory. In various embodiments, the second channel type can be distinct from the first channel type described with respect to block 302. In a particular embodiment, the second channel type can be a wireless channel type that uses Bluetooth protocol.

If the capability information received at block 304 indicates that accessory 206 is capable of providing status information identifying communication channels of a second type supported by the accessory, PMD 202 can transmit an indication over the first communication channel that PMD 202 is interested in receiving the status information (block 306). In one set of embodiments, this can include sending a *SetAccStatusNotification* command that includes a parameter specifying that PMD 202 is interested in receiving notification about Bluetooth connections from accessory 206.

PMD 202 can then receive, over the first communication channel, the status information identifying communication channels of the second type supported by accessory 206 (block 308). In one set of embodiments, this can include receiving an *AccessoryStatusNotification* command that includes a list of communication channel identifiers. In embodiments where the second channel type is Bluetooth, the status information received at block 308 can include, *inter alia,* one or more Bluetooth MAC addresses that are available for establishing Bluetooth connections with accessory 206. Alternatively, the status information can include any other type of information (e.g., names, identifiers, etc.) sufficient to uniquely identify communication channels of the second type.

In addition to receiving the status information at block 308, PMD 202 can, in certain embodiments, receive an indication over the first communication channel that the accessory is interested in receiving notifications when PMD 202 connects or disconnects with the accessory over any communication channel of the second type. In one set of embodiments, this can include receiving a *SetEventNotification* command with a parameter (e.g., a bitmask) that identifies that the accessory is interested in receiving notifications whenever there is a connection or disconnection of the second channel type. In effect, this command is sent by accessory 206 when it wishes to register with PMD 202 to receive connect/disconnect notifications regarding channels of the second type.

Subsequent to blocks 302 through 310, PMD 202 and accessory 206 can interoperate over the first communication channel based on the functionality provided by the accessory. At some point, PMD 202 can establish a connection with accessory 206 on a second communication channel of the second type, while PMD 202 is still connected to the accessory over the first communication channel (block 312). For example, this can include establishing a Bluetooth HFP connection with accessory 206 over a Bluetooth communication channel.

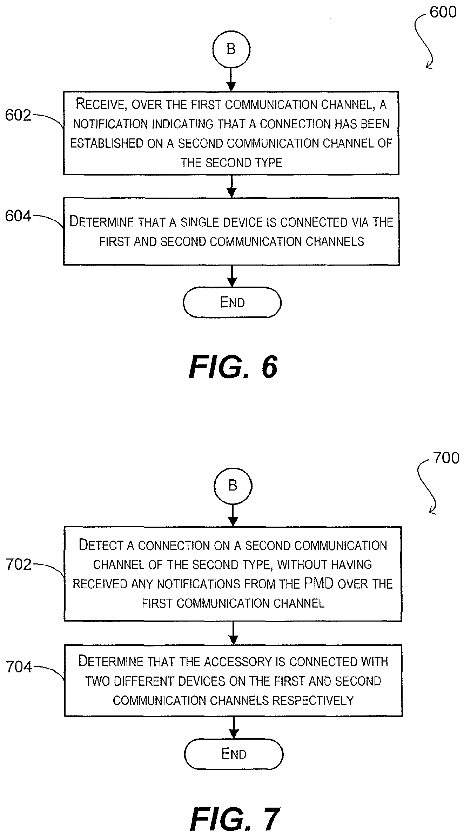

Upon establishing the connection on the second communication channel, PMD 202 can transmit, over the first communication channel, a notification indicating that the connection has been established (block 314). In one set of embodiments, this can include transmitting an *iPodNotification* command with, e.g., a parameter that identifies the second channel type (e.g., Bluetooth), a parameter that identifies the connection on the second communication channel (e.g., a Bluetooth MAC address), and a parameter that specifies a "connect" event has occurred. As described with respect to FIG. 6 below, accessory 206 can use this information to determine that the same PMD (i.e., PMD 202) is connected with the accessory over both the first and second communication channels.

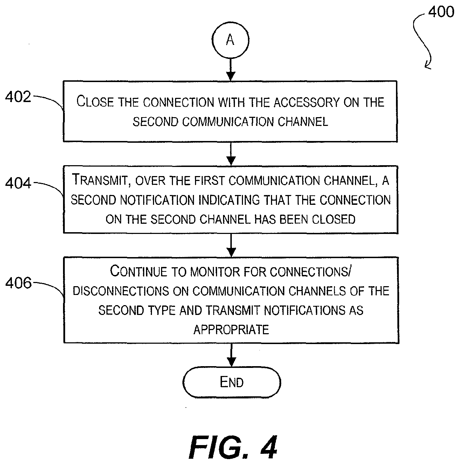

FIG. 4 is a flow diagram of a process 400 that can be performed by PMD 202 subsequent to process 300 of FIG. 3 according to an embodiment of the present invention. Like process 300, process 400 can be implemented by PMD 202 in hardware, software, or a combination thereof. As software, process 300 can be encoded as program code stored on a machine-readable storage medium.

At block 402, PMD 202 can close the connection established at block 312. PMD 202 can then transmit, over the first communication channel, a second notification indicating that the connection on the second communication channel has been closed (block 404). In one set of embodiments, this can include transmitting the same *iPodNotification* command sent at block 314, but with a parameter specifying that a "disconnect" event (rather than a "connect" event) has occurred. Accessory 206 can use this information to determine that PMD 202 is no longer connected via the second communication channel.

Once the second notification has been sent, PMD 202 can continue to monitor for connections/disconnections to accessory 206 on communication channels of the second type, and can transmit notifications to accessory 206 over the first communication channel as appropriate. This can continue indefinitely until, for example, the first communication channel becomes disconnected, or until PMD 202 is powered off or placed in a suspended/sleep state.

It should be appreciated that processes 300 and 400 are illustrative and that variations and modifications are possible. For example, in some embodiments, PMD 202 may already be connected with accessory 206 via a second communication channel of the second type when the *AccessoryStatusNotification* command is received at block 310. In these embodiments, PMD 202 can send the notification of block 314 immediately after block 310. Further, steps described as sequential may be executed in parallel, order of steps may be varied, and steps may be modified, combined, added, or omitted. One of ordinary skill in the art will recognize other variations, modifications, and alternatives.

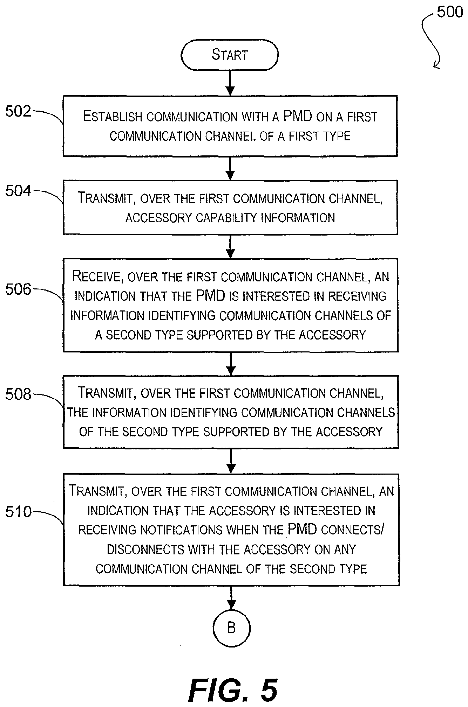

FIG. 5 is a flow diagram of a process 500 that can be performed by accessory 206 upon connecting with PMD 202 via a first communication channel of a first type according to an embodiment of the present invention. In one set of embodiments, process 500 can be performed by accessory 206 while process 300 of FIG. 3 is being performed by PMD 202. In a particular embodiment, process 500 can be performed by accessory 206 as part of an initialization sequence prior to engaging in normal operation with PMD 202. Process 500 can be implemented by accessory 206 in hardware, software, or a combination thereof. As software, process 500 can be encoded as program code stored on a machine-readable storage medium.

At block 502, accessory 206 can establish communication with PMD 202 on a first communication channel of a first type. In various embodiments, the first channel type can be a wired channel type (e.g., 30 pin serial, USB, etc.) or a wireless (e.g., WiFi, infrared, radio frequency, etc.) channel type. In a particular embodiment, the first channel type can be configured to pass control signals between accessory 206 and PMD 202 according to an accessory control protocol, such as iAP.

At block 504, accessory 206 can transmit, over the first communication channel, accessory capability information to PMD 202. For example, accessory 206 can transmit information indicating whether accessory 206 is capable of providing status information identifying communication channels of a second type supported by the accessory. In various embodiments, the second channel type can be distinct from the first channel type described with respect to block 502. In a particular embodiment, the second channel type can be a wireless channel type that uses Bluetooth protocol.

If accessory 206 is capable of providing status information identifying communication channels of a second type supported by the accessory, accessory 206 can receive, over the first communication channel, an indication that PMD 202 is interested in receiving the status information (block 506). In one set of embodiments, this can include receiving the *SetAccStatusNotification* command described with respect to block 306.

Accessory 206 can then transmit over the first communication channel the requested status information (block 508). In one set of embodiments, this can include transmitting the *AccessoryStatusNotification* command described with respect to block 308. In embodiments where the second channel type is Bluetooth, the status information sent at block 308 can include, *inter alia,* one or more Bluetooth MAC addresses that are available for establishing Bluetooth connections with accessory 206. Alternatively, the status information can include any other type of information (e.g., names, identifiers, etc.) sufficient to uniquely identify communication channels of the second type.

In addition to transmitting the status information at block 508, accessory 206 can, in certain embodiments, transmit an indication over the first communication channel that the accessory is interested in receiving notifications when PMD 202 connects or disconnects with the accessory over any communication channel of the second type. In one set of embodiments, this can include transmitting the *SetEventNotification* command described with respect to block 310. In effect, this command is sent by accessory 206 when it wishes to register with PMD 202 to receive connect/disconnect notifications regarding channels of the second type.

FIGS. 6 and 7 are flow diagrams of processes 600 and 700 that can be performed by accessory 206 subsequent to process 500 of FIG. 5 according to an example. In particular, process 600 can be performed when a connection is established on a second communication channel of the second type between accessory 206 and PMD 202, and process 700 can be performed when a connection is established on a second communication channel of the second type between accessory 206 and a different PMD than PMD 202 (e.g., PMD 204). Like process 500, processes 600 and 700 can be implemented by accessory 206 in hardware, software, or a combination thereof. As software, processes 600 and 700 can be encoded as program code stored on a machine-readable storage medium.

With respect to process 600, accessory 206 can receive over the first communication channel a notification indicating that a connection has been established on a second communication channel of the second type between accessory 206 and PMD 202 (block 602). In one set of examples, this can include receiving the *iPodNotification* command described with respect to block 314 of FIG. 3.

At block 604, accessory 206 can use the information in the notification to determine that the same PMD (i.e., PMD 202) is connected with the accessory over both the first and second communication channels. Accessory 206 can then make intelligent decisions about its interoperation with the PMD. For instance, returning to the example of FIG. 1, accessory
106 can determine (using process 600) that it is connected with a single PMD (PMD 102) over both wired communication channel 112 and wireless (e.g., Bluetooth) communication channel 118. Accordingly, when an incoming call is detected on channel 118, accessory 106 can request/receive an appropriate "call answer" user interface from PMD 102 over wired communication channel 112, and can present that UI on output device 128.

Alternatively, with respect to process 700, accessory 206 can detect a connection on a second communication channel of the second type, without having received any notifications from PMD 202 over the first communication channel (block 702). For example, the connection may have been established by a different PMD than 202 (e.g., PMD 204). In this scenario, accessory 206 determine that it is connected to two different devices (e.g., 202 and 204) on the first and second communication channels respectively, and can make intelligent decisions about its interoperation with the two devices (block 704). For instance, returning to the example of FIG. 1, accessory 106 can determine (using process 700) that it is connected to PMD 102 over wired communication channel 112 and with a different PMD (PMD 104) over wireless (e.g., Bluetooth) communication channel 124. Accordingly, when an incoming call is detected on channel 124, accessory 106 can render its own "call answer" user interface for handling the call with respect to PMD 104 (rather than requesting/receiving a user interface from PMD 102 over wired communication channel 112).

It should be appreciated that processes 500, 600, and 700 are illustrative and that variations and modifications are possible. For example, in certain embodiments of process 600, accessory 206 can further receive a second notification over the first communication channel indicating that the connection on the second communication channel has been closed. Accessory 206 can then determine that PMD 202 is no longer connected via the second communication channel. Further, steps described as sequential may be executed in parallel, order of steps may be varied, and steps may be modified, combined, added, or omitted. One of ordinary skill in the art will recognize other variations, modifications, and alternatives.

While the invention has been described with respect to specific embodiments, it should be appreciated that numerous modifications are possible. In some embodiments, circuits, processors, and/or other components of a PMD and/or accessory may be configured to perform various operations described herein. Those skilled in the art will appreciate that, depending on implementation, such configuration can be accomplished through design, setup, interconnection, and/or programming of the particular components and that, again depending operation. For example, a programmable processor can be configured by providing suitable executable code; a dedicated logic circuit can be configured by suitably connecting logic gates and other circuit elements; and so on. Further, while the embodiments described above may make reference to specific hardware and software components, those skilled in the art will appreciate that different combinations of hardware and/or software components may also be used and that particular operations described as being implemented in hardware can also be implemented in software or vice versa.

Computer programs incorporating some or all features described herein may be encoded on various machine-readable storage media; suitable media include magnetic disk (including hard disk) or tape, optical storage media such as compact disk (CD) or DVD (digital versatile disk), flash memory, and the like. Machine-readable storage media encoded with the program code may be packaged with a compatible device or provided separately from other devices. In addition, program code may be encoded and transmitted via wired, optical, and/or wireless networks conforming to a variety of protocols, including the Internet, thereby allowing distribution, e.g., via Internet download.

## Claims

1. A method performed by an accessory (106) having an input/output interface (232) capable of communicating with a first portable media device (102) and a second portable media device (104), the method comprising:
establishing a connection to the first portable media device (102) over a first communication channel of a first type (112);
transmitting, to the first portable media device (102) over the first communication channel of the first type (112), information identifying a communication channel of a second type (118) supported by the accessory (106);
transmitting, to the first portable media device (102) over the first communication channel (112), a command indicating that the accessory (106) is interested in receiving notifications when the first portable media device (102) connects or disconnects with the accessory (106) over the communication channel of the second type (118); and
while the accessory (106) remains connected to the first portable media device (102) over the first communication channel (112):
detecting a connection on the communication channel of the second type (118); and:
if a notification that the first portable media device (102) has connected with the accessory (106) over the communication channel of the second type (118) has been received over the first communication channel (112), then
determining, on the basis that the notification was received, that the accessory (106) is connected to the first portable media device (102) over the communication channel of the second type (118), otherwise
if a notification that the first portable media device (102) has connected with the accessory (106) over the communication channel of the second type (118) has not been received over the first communication channel (112), then
determining, on the basis that no notification was received, that the accessory (106) is connected to the second portable media device (102) over the communication channel of the second type (118).

2. The method of claim 1 further comprising, subsequent to determining that the accessory (106) is connected to the first portable media device (102) over the communication channel of the second type (118):
receiving, from the first portable media device (102) over the first communication channel (112), a second notification indicating that the connection over the communication channel of the second type (118) has been closed.

3. The method of claim 1 further comprising, prior to transmitting the information identifying the communication channels of the second type (118):
transmitting, to the first portable media device (102) over the first communication channel (112), a command indicating that the accessory (106) is capable of providing the information identifying the communication channels of the second type (118); and
receiving, from the first portable media device (102) over the first communication channel (112), a command indicating that the first portable media device (102) is interested in receiving the information.

4. The method of claim 1 wherein the first type is a wired interface type and the second type is a wireless interface type.

5. The method of claim 1 wherein the command indicating that the accessory (106) is interested in receiving notifications when the first portable media device (102) connects or disconnects with the accessory over the communication channel of the second type (118) is included in a notification command transmitted over the first communication channel (112), the notification command including a bitmask.

6. The method of claim 1 wherein the information identifying the communication channel of the second type (118) includes a MAC address for the accessory (106) on the communication channel of the second type (118).

7. The method of claim 1 further comprising: making a decision about accessory operation based on whether the communication channel of the second type is connected to the first portable media device (102) or the second portable media device (104).

8. The method of claim 7 wherein making the decision includes:
detecting an incoming call on the communication channel of the second type (118);
in the event that the communication channel of the second type (118) is connected to the first portable media device (102), communicating with the first portable media device (102) over the first communication channel (112) to obtain and present a user interface for answering the call; and
in the event that the communication channel of the second type (118) is connected to the second portable media device (104), generating a user interface for answering the call with respect to the second portable media device (104).

9. An accessory (106) comprising:
a first communication interface of a first type;
one or more second communication interfaces of a second type distinct from the first type; and
a control component configured to perform the method of any one of claims 1-8.

10. The accessory (106) of claim 9 wherein the accessory is a car head unit.

## Patentansprüche

1. Verfahren, das durch eine Zubehörvorrichtung (106) durchgeführt wird, welche eine Eingabe/Ausgabe-Schnittstelle (232) aufweist, die in der Lage ist, mit einer ersten tragbaren Medienvorrichtung (102) und einer zweiten tragbaren Medienvorrichtung (104) zu kommunizieren, wobei das Verfahren umfasst:
Einrichten einer Verbindung mit der ersten tragbaren Medienvorrichtung (102) über einen ersten Kommunikationskanal einer ersten Art (112);
Übertragen, zu der ersten tragbaren Medienvorrichtung (102) über den ersten Kommunikationskanal der ersten Art (112), von Informationen, die einen Kommunikationskanal einer zweiten Art (118) identifizieren, welcher durch die Zubehörvorrichtung (106) unterstützt wird;
Übertragen, an die erste tragbare Medienvorrichtung (102) über den ersten Kommunikationskanal (112), eines Befehls, der anzeigt, dass die Zubehörvorrichtung (106) daran interessiert ist Benachrichtigungen zu empfangen, wenn die erste tragbare Medienvorrichtung (102) sich mit der Zubehörvorrichtung (106) über den Kommunikationskanal der zweiten Art (118) verbindet oder sich von dieser trennt; und
während die Zubehörvorrichtung (106) mit der ersten tragbaren Medienvorrichtung (102) über den ersten Kommunikationskanal (112) verbunden bleibt:
Detektieren einer Verbindung auf dem Kommunikationskanal der zweiten Art (118); und:
wenn eine Benachrichtigung, dass sich die erste tragbare Medienvorrichtung (102) mit der Zubehörvorrichtung (106) über den Kommunikationskanal der zweiten Art (118) verbunden hat, über den ersten Kommunikationskanal (112) empfangen worden ist, dann
Bestimmen, auf der Basis, dass die Benachrichtigung empfangen wurde, dass die Zubehörvorrichtung (106) mit der ersten tragbaren Medienvorrichtung (102) über den Kommunikationskanal der zweiten Art (118) verbunden ist, sonst
wenn eine Benachrichtigung, dass sich die erste tragbare Medienvorrichtung (102) mit der Zubehörvorrichtung (106) über den Kommunikationskanal der zweiten Art (118) verbunden hat, nicht über den ersten Kommunikationskanal (112) empfangen worden ist, dann
Bestimmen, auf der Basis, dass keine Benachrichtigung empfangen wurde, dass die Zubehörvorrichtung (106) mit der zweiten tragbaren Medienvorrichtung (102) über den Kommunikationskanal der zweiten Art (118) verbunden ist.

2. Verfahren nach Anspruch 1, ferner umfassend, nachfolgend zum Bestimmen, dass die Zubehörvorrichtung (106) mit der ersten tragbaren Medienvorrichtung (102) über den Kommunikationskanal der zweiten Art (118) verbunden ist:
Empfangen, von der ersten tragbaren Medienvorrichtung (102) über den ersten Kommunikationskanal (112), einer zweiten Benachrichtigung, die anzeigt, dass die Verbindung über den Kommunikationskanal der zweiten Art (118) beendet worden ist.

3. Verfahren nach Anspruch 1, ferner umfassend, vor dem Übertragen der Information, welche die Kommunikationskanäle der zweiten Art (118) identifiziert:
Übertragen, an die erste tragbare Medienvorrichtung (102) über den ersten Kommunikationskanal (112), eines Befehls, der anzeigt, dass die Zubehörvorrichtung (106) in der Lage ist, die Information bereitzustellen, welche die Kommunikationskanäle der zweiten Art (118) identifiziert; und
Empfangen, von der ersten tragbaren Medienvorrichtung (102) über den ersten Kommunikationskanal (112), eines Befehls, der anzeigt, dass die erste tragbare Medienvorrichtung (102) daran interessiert ist, die Information zu empfangen.

4. Verfahren nach Anspruch 1, wobei die erste Art eine drahtgebundene Schnittstellenart und die zweite Art eine drahtlose Schnittstellenart ist.

5. Verfahren nach Anspruch 1, wobei der Befehl, der anzeigt, dass die Zubehörvorrichtung (106) daran interessiert ist Benachrichtigungen zu empfangen, wenn sich die erste tragbare Medienvorrichtung (102) mit der Zubehörvorrichtung über den ersten Kommunikationskanal der zweiten Art (118) verbindet oder sich von dieser trennt, in einem Benachrichtigungsbefehl beinhaltet ist, welcher über den ersten Kommunikationskanal (112) übertragen wird, wobei der Benachrichtigungsbefehl eine Bitmaske beinhaltet.

6. Verfahren nach Anspruch 1, wobei die Information, welche den Kommunikationskanal der zweiten Art (118) identifiziert, eine MAC-Adresse für die Zubehörvorrichtung (106) auf dem Kommunikationskanal der zweiten Art (118) beinhaltet.

7. Verfahren nach Anspruch 1, ferner umfassend:
Treffen einer Entscheidung über den Betrieb der Zubehörvorrichtung, basierend darauf, ob der Kommunikationskanal der zweiten Art mit der ersten tragbaren Medienvorrichtung (102) oder der zweiten tragbaren Medienvorrichtung (104) verbunden ist.

8. Verfahren nach Anspruch 7, wobei das Treffen der Entscheidung beinhaltet:
Detektieren eines eingehenden Anrufs auf dem Kommunikationskanal der zweiten Art (118);
für den Fall, dass der Kommunikationskanal der zweiten Art (118) mit der ersten tragbaren Medienvorrichtung (102) verbunden ist, Kommunizieren mit der ersten tragbaren Medienvorrichtung (102) über den ersten Kommunikationskanal (112), um eine Benutzerschnittstelle zum Beantworten des Anrufs zu erhalten und zu präsentieren; und
für den Fall, dass der Kommunikationskanal der zweiten Art (118) mit der zweiten tragbaren Medienvorrichtung (104) verbunden ist, Erzeugen einer Benutzerschnittstelle zum Beantworten des Anrufs mit Bezug zu der zweiten tragbaren Medienvorrichtung (104).

9. Zubehörvorrichtung (106), umfassend:
eine erste Kommunikationsschnittstelle einer ersten Art;
eine oder mehrere zweite Kommunikationsschnittstellen einer zweiten Art, die von der ersten Art unterschiedlich ist; und
eine Steuerkomponente, die konfiguriert ist, um das Verfahren nach irgendeinem der Ansprüche 1 bis 8 durchzuführen.

10. Zubehörvorrichtung (106) nach Anspruch 9, wobei die Zubehörvorrichtung eine Fahrzeugkopfeinheit ist.

## Revendications

1. Un procédé mis en oeuvre par un accessoire (106) possédant une interface d'entrée/sortie (232) capable de communiquer avec un premier dispositif portable pour media (102) et un second dispositif portable pour media (104), le procédé comprenant :
l'établissement d'une connexion au premier dispositif portable pour media (102) via un premier canal de communication d'un premier type (112) ;
la transmission, au premier dispositif portable pour media (102) via le premier canal de communication du premier type (112), d'une information identifiant un canal de communication d'un second type (118) pris en charge par l'accessoire (106) ;
la transmission, au premier dispositif portable pour media (102) via le premier canal de communication (112), d'une commande indiquant que l'accessoire (106) est intéressé à recevoir des notifications lorsque le premier dispositif portable pour media (102) se connecte à l'accessoire (106) ou s'en déconnecte via le canal de communication du second type (118) ; et
tant que l'accessoire (106) reste connecté au premier dispositif portable pour media (102) via le premier canal de communication (112) :
la détection d'une connexion sur le canal de communication du second type (118) ; et :
si une notification que le premier dispositif portable pour media (102) s'est connecté à l'accessoire (106) via le canal de communication du second type (118) a été reçue via le premier canal de communication (112), alors
la détermination, sur la base du fait que la notification a été reçue, que l'accessoire (106) est connecté au premier dispositif portable pour media (102) via le canal de communication du second type (118), sinon
si une notification que le premier dispositif portable pour media (102) s'est connecté à l'accessoire (106) via le canal de communication du second type (118) n'a pas été reçue via le premier canal de communication (112), alors
la détermination, sur la base du fait qu'aucune notification n'a été reçue, que l'accessoire (106) est connecté au second dispositif portable pour media (102) via le canal de communication du second type (118) .

2. Le procédé de la revendication 1, comprenant en outre, à la suite de la détermination que l'accessoire (106) est connecté au premier dispositif portable pour media (102) via le canal de communication du second type (118) :
la réception, en provenance du premier dispositif portable pour media (102) via le premier canal de communication (112), d'une seconde notification indiquant que la connexion via le canal de communication du second type (118) a été fermée.

3. Le procédé de la revendication 1, comprenant en outre, avant transmission de l'information identifiant le canal de communication du second type (118) :
la transmission, au premier dispositif portable pour media (102) via le premier canal de communication (112), d'une commande indiquant que l'accessoire (106) est capable de produire l'information identifiant le canal de communication du second type (118) ; et
la réception, en provenance du premier dispositif portable pour media (102) via le premier canal de communication (112), d'une commande indiquant que le premier dispositif portable pour media (102) est intéressé à recevoir l'information.

4. Le procédé de la revendication 1, dans lequel le premier type est un type d'interface filaire et le second type est un type d'interface sans fil.

5. Le procédé de la revendication 1, dans lequel la commande indiquant que l'accessoire (106) est intéressé à recevoir des notifications lorsque le premier dispositif portable pour media (102) se connecte à l'accessoire (106) ou s'en déconnecte via le canal de communication du second type (118) est incluse dans une commande de notification transmise via le premier canal de communication (112), la commande de notification comprenant un masque de bits.

6. Le procédé de la revendication 1, dans lequel l'information identifiant le canal de communication du second type (118) comprend une adresse MAC pour l'accessoire (106) sur le canal de communication du second type (118).

7. Le procédé de la revendication 1, comprenant en outre : la prise de décision concernant une opération de l'accessoire sur la base du point de savoir si le canal de communication du second type est ou non connecté au premier dispositif portable pour media (102) ou au second dispositif portable pour media (104).

8. Le procédé de la revendication 7, dans lequel la prise de décision comprend :
la détection d'un appel entrant sur le canal de communication du second type (118) ;
dans le cas où le canal de communication du second type (118) est connecté au premier dispositif portable pour media (102), la communication avec le premier dispositif portable pour media (102) via le premier canal de communication (112) pour obtenir et présenter une interface utilisateur pour répondre à l'appel ; et
dans le cas où le canal de communication du second type (118) est connecté au second dispositif portable pour media (104), la génération d'une interface utilisateur pour répondre à l'appel par rapport au second dispositif portable pour media (104).

9. Un accessoire (106) comprenant :
une première interface de communication d'un premier type ;
une ou plusieurs secondes interfaces de communication d'un second type distinct du premier type ; et
un composant de contrôle configuré pour mettre en oeuvre le procédé de l'une des revendications 1 à 8.

10. L'accessoire (106) de la revendication 9, dans lequel l'accessoire est une unité de terminal de voiture.
